# EUROPÄISCHE PATENTSCHRIFT

(11) **EP 1 531 526 B1**
(45) Veröffentlichungstag und Bekanntmachung des Hinweises auf die Patenterteilung: **13.12.2006**
(21) Anmeldenummer: 04024027.7
(22) Anmeldetag: 08.10.2004
(51) Int. Cl.: H01R 13/707

(54) **Vorrichtung mit Gehäuse, mindestens einer Steckeraufnahme und mindestens einem Leistungsschalter**
Apparatus with housing, at least one plug socket, and at least one power switch
Dispositif avec un boitier, au moins une prise de courant et au moins un interrupteur de puissance

(30) Priorität: 17.11.2003 DE 20317764 U
(43) Veröffentlichungstag der Anmeldung: 18.05.2005
(73) Patentinhaber: aqua signal Aktiengesellschaft, 28307 Bremen (DE)
(72) Erfinder: Rohlfing, Ralph, 28844 Weyhe (DE)
(74) Vertreter: Heiland, Karsten

(56) Entgegenhaltungen:
- DE-A1- 19 706 358
- DE-U- 7 026 207
- DE-U1- 20 210 357
- DE-U1- 29 807 529

## Beschreibung

Die Erfindung betrifft eine Vorrichtung mit Gehäuse, mindestens einer Steckeraufnahme, mindestens einem Leistungsschalter, mindestens einer Betätigungseinrichtung für den Leistungsschalter und insbesondere mindestens einem Sperrmittel für die Betätigungseinrichtung, mit folgenden Merkmalen:
a) die Betätigungseinrichtung weist eine drehbare Schaltwelle auf,
b) die Schaltwelle ist mit einem Kupplungsstück versehen,
c) die Schaltwelle ist zumindest zwischen einer "Ein"-Position und einer "Aus"-Position drehbar,
d) die Schaltwelle weist einen quergerichteten Blockierhebel auf, der in der "Ein"-Position ein Herausziehen eines Steckers aus der Steckeraufnahme blockiert und in der "Aus"-Position das Einsetzen und/oder Herausziehen des Steckers in die bzw. aus der Steckeraufnahme zulässt.

Ein Teil der auf Schiffen transportierten Container muss zwecks Kühlung oder aus anderen Gründen mit elektrischer Energie versorgt werden. Zum Anschluss der Container an das elektrische Netz des Schiffes sind spezielle Steckdosen mit Leistungsschaltern in Gehäusen vorgesehen. Die Gehäuse sind überwiegend seitlich an aufrechten Wänden an Bord des Schiffes befestigt und beherbergen mindestens eine, meistens aber mehrere Steckeraufnahmen (Steckdosen) zum Anschluss von mit den Containern verbundenen elektrischen Kabeln. Die Anschlüsse und entsprechend die Steckeraufnahmen sind weitgehend genormt. Üblicherweise sind die Steckeraufnahmen an einer nach unten gerichteten Seite des Gehäuses vorgesehen. Auch existieren Sicherheitsvorschriften, nach denen ein Einschalten des Leistungsschalters bei nicht belegter Steckeraufnahme verhindert werden soll, ebenso eine Abnahme des Steckers bei eingeschaltetem Leistungsschalter. Neben der elektrischen Sicherheit ist die mechanische von hoher Bedeutung, wie auch die raueren Bedingungen auf See zu beachten sind.

Aus der DE-A-197 06 358 ist eine Betätigungsvorrichtung für einen Leistungsschalter bekannt, bei der die Drehung der Schaltwelle über eine Nockenspur in eine lineare Bewegung zur Beaufschlagung des Leistungsschalters umgesetzt wird. Kraftaufwand und Reibungsverluste sind relativ hoch. Auch ist die mechanische Konstruktion relativ aufwendig.

Aufgabe der vorliegenden Erfindung ist es, eine Vorrichtung der eingangs genannten Art zu schaffen, die die Anforderungen an die elektrische und mechanische Sicherheit sowie die Arbeitssicherheit in besonders hohem Maße erfüllt und die dabei möglichst einfach aufgebaut und kostengünstig herstellbar ist.

Die erfindungsgemäße Vorrichtung ist durch folgende Merkmale gekennzeichnet:
e) ein Schalthebel des Leistungsschalters ist im Wesentlichen in einer Ebene quer zur Längsrichtung der Schaltwelle bewegbar,
f) das Kupplungsstück und der Schalthebel sind so ausgebildet, dass eine mit der Schaltwelle rotierende Bewegung des Kupplungsstücks den Schalthebel direkt beaufschlagt,
g) das Kupplungsstück ist eine auf der Schaltwelle angeordnete Schaltgabel mit Gabelarmen,
h) je nach Drehbewegung der Schaltwelle drücken die Gabelarme den Schalthebel in die eine oder andere Richtung.

Üblicherweise ist der Leistungsschalter im Gehäuse angeordnet, während die Steckeraufnahme im Wesentlichen parallel zur Schaltwelle ausgerichtet ist, außen am Gehäuse sitzt und zum Teil in das Gehäuse hineinragt. Die Schaltwelle ist äußerst einfach aufgebaut, etwa als Stange mit umgebogenem freien Ende zur Ausbildung des Blockierhebels. Die Schaltwelle ragt mit dem umgebogenen Ende, d.h. mit dem Blockierhebel, aus dem Gehäuse heraus. Übliche Stecker sind mit einem in der Steckeraufnahme sitzenden Ende breiter ausgebildet als mit einem dem anzuschließenden Kabel zugewandten Ende und/oder sind mit einer Manschette nach Art einer Überwurfmutter versehen. Der Blockierhebel liegt in der "EIN"-Position in Steckrichtung vor der Manschette oder einem Teil des breiteren Endes des Steckers, so dass letzterer in dieser Position des Blockierhebels nicht aus der Steckeraufnahme herausgezogen werden kann.

Der Schalthebel des Leistungsschalters ist in einer Ebene quer zur Schaltwelle bewegbar, insbesondere kippbar, und wird vorzugsweise vom Kupplungsstück direkt beaufschlagt. In einer für Leistungsschalter bekannten Ausführung ist der Schalthebel als bistabiler Kippschalter ausgebildet und somit zwischen zwei stabilen Positionen hin- und herbewegbar.

Nach einem weiteren Gedanken der Erfindung sind das Kupplungsstück und der Schalthebel des Leistungsschalters so ausgebildet, dass eine mit der Schaltwelle rotierende Bewegung des Kupplungsstücks für die Betätigung des Schalthebels vorgesehen ist. Vorzugsweise ist das Kupplungsstück als Schaltgabel mit Gabelarmen beidseits des Schalthebels des Leistungsschalters ausgebildet. Einer der Gabelarme drückt den Schalthebel in eine Richtung, während der andere Gabelarm den Schalthebel in Gegenrichtung beaufschlagen kann. Dabei können herkömmliche Leistungsschalter verwendet werden. Diese werden in das Gehäuse quer zur Schaltwelle eingebaut. "Quer" bedeutet dabei, dass der Schalthebel im Wesentlichen in einer Ebene quer zur Schaltwelle bewegbar ist.

Nach einem weiteren Gedanken der Erfindung umfasst das Sperrmittel einen Sperrstift, der von einem Stecker beim Einsetzen desselben in die Steckeraufnahme aus einer Sperrposition axial verschiebbar ist in eine entsperrte Position, wobei der Sperrstift in der Sperrposition mittelbar oder unmittelbar die Betätigung des Schalthebels oder der Schaltwelle blockiert. Entsprechend liegt in entsperrter Position keine Blockierung vor. Der Sperrstift verläuft vorzugsweise parallel zur Schaltwelle. Ein freies Ende des Sperrstiftes erstreckt sich in die Steckeraufnahme, so dass ein Stecker beim Einsetzen desselben in die Steckeraufnahme den Sperrstift axial verschiebt.

Nach einem weiteren Gedanken der Erfindung bewegt der Sperrstift bei seiner Bewegung in die Sperrposition einen Sperrhebel, der in Sperrposition in den Bewegungsraum eines von der Schaltwelle betätigten Vorsprungs ragt und so eine Drehbewegung der Schaltwelle zumindest aus der "AUS"-Position in die "EIN"-Position blockiert. Entsprechend besteht außerhalb der Sperrposition des Sperrstifts keine Blockierung der Schaltwelle. Der Sperrstift soll in axialer Richtung mit möglichst wenig Reibung und nur gegen den Widerstand einer Feder bewegbar sein.

Nach einem weiteren Gedanken der Erfindung ist auf der Schaltwelle ein Sperrstück angeordnet mit mindestens einem wirksamen Vorsprung. Dabei ist eine Drehung der Schaltwelle in mindestens einer Richtung durch eine Bewegung des Sperrmittels, insbesondere des Sperrhebels, in den Bewegungsraum des drehenden Vorsprungs blockierbar.

Vorteilhafterweise weist das Sperrstück zwei wirksame Vorsprünge auf, derart, dass eine Drehung der Schaltwelle in beide Richtungen durch das Sperrmittel blockierbar ist. Vorzugsweise ist das Sperrstück als dicke Scheibe oder Zylinderstück mit einer abgeflachten Umfangsseite ausgebildet. Die beiden Übergänge zwischen der Abflachung und dem Umfang im Übrigen sind dann die wirksamen Vorsprünge. Vorteilhafterweise weist der Sperrhebel eine Fläche auf, die in Sperrposition mit möglichst geringem Abstand zur Abflachung und parallel zu dieser angeordnet ist, so dass die Schaltwelle nahezu spielfrei oder mit nur geringem Spiel an nahezu jeder Drehbewegung gehindert ist.

Nach einem weiteren Gedanken der Erfindung ist vorgesehen, dass im Gehäuse in Längsrichtung desselben mehrere Leistungsschalter nebeneinander angeordnet sind, bei quer zur Längsrichtung des Gehäuses ausgerichteten Schaltwellen, und dass zueinander benachbarte Leistungsschalter in Richtung der Schaltwellen versetzt zueinander angeordnet sind, insbesondere unter Vermeidung einer Überdeckung. Die Leistungsschalter nehmen in Längsrichtung des Gehäuses relativ viel Platz ein. Dadurch ist von Schaltwelle zu Schaltwelle ein größerer Abstand erforderlich. Entsprechend breit fällt ein Gehäuse zur Aufnahme mehrerer Leistungsschalter aus (auf Grund der typischen Einbaulage der Vorrichtung erstreckt sich die "Breite" des Gehäuses in dessen Längsrichtung). Mit der erfindungsgemäßen Gestaltung kann die Breite des Gehäuses bei nur geringfügiger Zunahme der Höhe verringert werden.

Weitere Merkmale der Erfindung ergeben sich aus den Ansprüchen und aus der Beschreibung im Übrigen. Vorteilhafte Ausführungsbeispiele der Erfindung werden nachfolgend anhand von Zeichnungen näher erläutert. Es zeigen:
- Fig. 1: eine Seitenansicht einer erfindungsgemäßen Vorrichtung,
- Fig. 2: einen Leistungsschalter mit einem von einer Schaltgabel betätigten Schalthebel im Inneren der Vorrichtung,
- Fig. 3: eine perspektivische Darstellung der erfindungsgemäßen Vorrichtung, jedoch ohne Gehäuse,

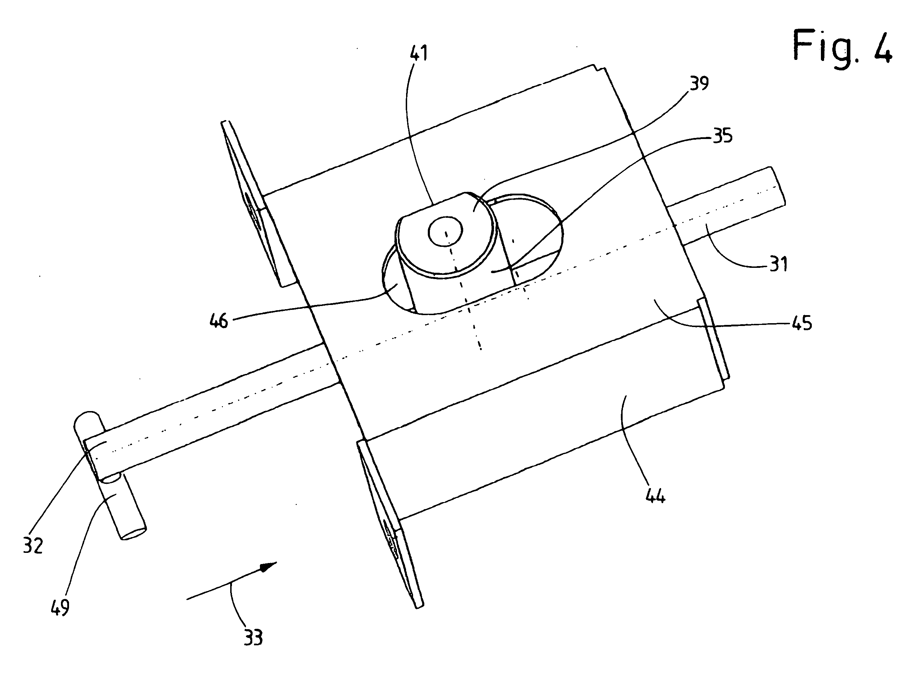

- Fig. 4: einen Teil der Vorrichtung gemäß Fig. 3, nämlich einen Sperrstift mit Sperrhebel und Halterung hierfür, aus einer etwas anderen Perspektive,
- Fig. 5: die Vorrichtung gemäß Fig. 3 jedoch in Seitenansicht, mit Sperrstift und Sperrhebel in Sperrposition,
- Fig. 6: eine Darstellung analog Fig. 5, jedoch mit Sperrstift und Sperrhebel in entsperrter Position,
- Fig. 7: eine Darstellung analog Fig. 3 aber mit Ansicht eines Steckers in einer Steckeraufnahme,
- Fig. 8: eine Unteransicht der Vorrichtung,
- Fig. 9: ein Gehäuse ohne Vorderwand, mit vier Leistungsschaltern.

Ein Gehäuse 10 weist Oberwand 11, Bodenwand 12, Vorderwand 13, Rückwand 14 und Seitenwände 15 auf. Im Bereich der Rückwand 14 ist das Gehäuse 10 mit Hilfe eines Tragblechs 16 an einer nicht gezeigten aufrechten Wandung, etwa an Bord eines Schiffes befestigt.

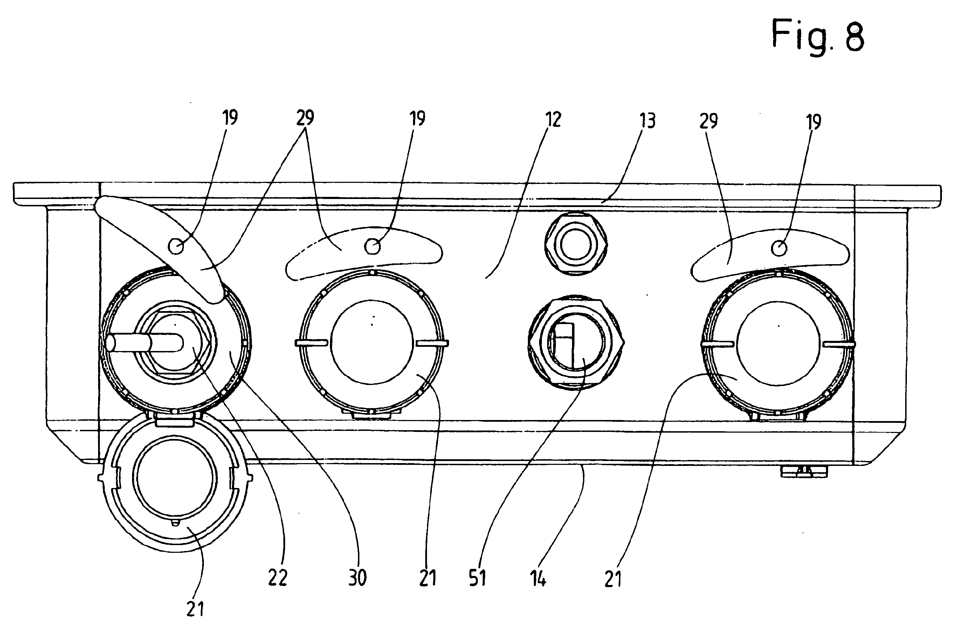

Im Gehäuse 10 sind vorzugsweise mehrere Leistungsschalter 17 nebeneinander angeordnet. Jeder Leistungsschalter 17 weist einen bistabilen Schalthebel 18 auf, der mittelbar durch Drehung einer eigenen Schaltwelle 19 betätigbar ist, siehe Fig. 8.

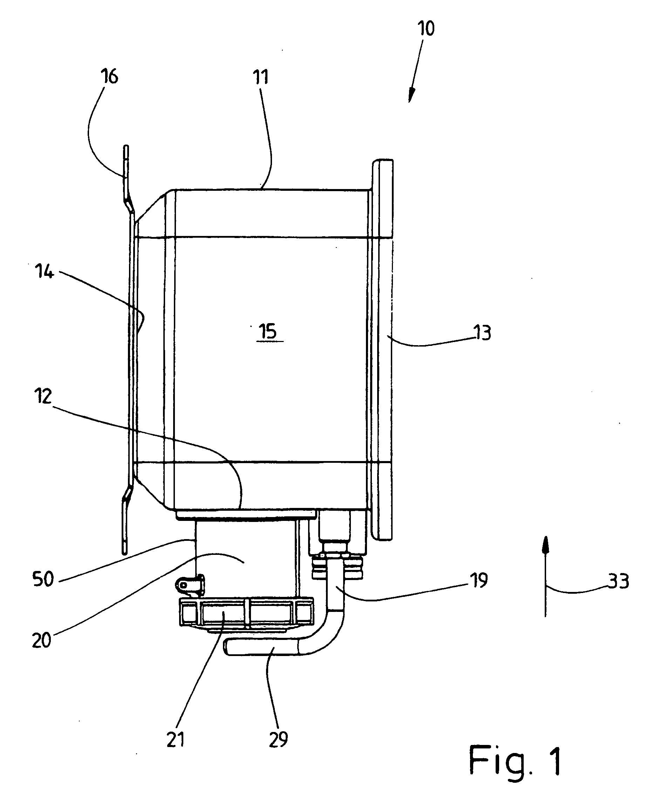

Die Schaltwelle 19 ragt im Bereich der Bodenwand 12 aus dem Gehäuse 10 nach unten heraus und verläuft etwa parallel zu einer ebenfalls unten aus dem Gehäuse 10 herausragenden Steckeraufnahme 20. In Fig. 1 ist eine Öffnung der Steckeraufnahme 20 durch einen klappbaren und zugleich aufschraubbaren Deckel 21 abgedeckt. Nach Öffnen des Deckels 21 ist in die Steckeraufnahme 20 ein Stecker 22 eines Stromkabels, beispielsweise für die elektrische Versorgung eines Containers an Bord von Schiffen, einsteckbar.

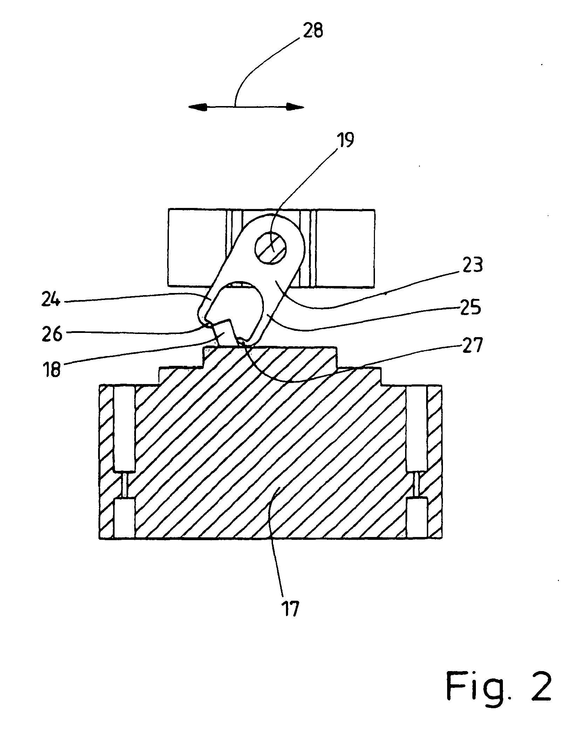

Zur Betätigung des Schalthebels 18 ist auf der Schaltwelle 19 eine Schaltgabel 23 mit Gabelarmen 24, 25 angeordnet. Die beiden Gabelarme weisen jeweils einwärts, d.h. gegeneinander gerichtete Enden 26, 27 auf, die den Leistungsschalter 18 je nach Drehbewegung der Schaltwelle 19 in die eine oder andere Richtung des Doppelpfeils 28 in Fig. 2 drücken.

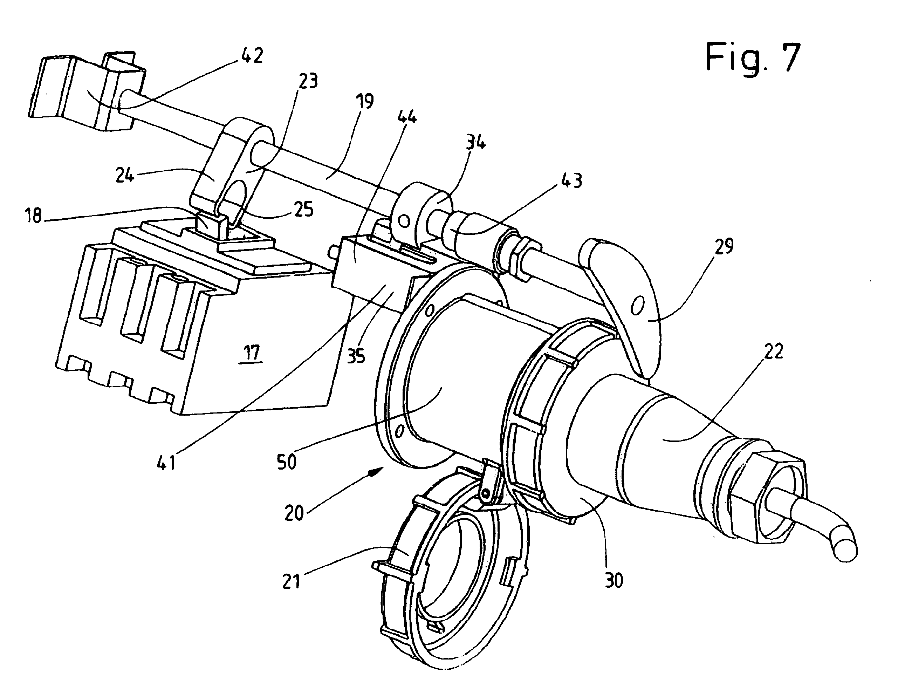

Der Steckeraufnahme 20 ist eine mechanische Sicherung zugeordnet, die gewährleisten soll, dass bei eingestecktem Stecker 22 und eingeschaltetem Leistungsschalter 17 der Stecker 22 nicht aus der Steckeraufnahme 20 herausgezogen werden kann. Hierzu ist die Schaltwelle 19 an ihrem aus dem Gehäuse 10 herausragenden Ende mit einem Blockierhebel 29 versehen, der bei eingeschaltetem Leistungsschalter ("EIN"-Position) in den Bewegungsraum des Steckers 22 hineinragt, derart, dass dieser nicht aus der Steckeraufnahme 20 herausziehbar ist. Üblicherweise ist der Stecker 22 mit einer Manschette 30 versehen, die ähnlich wie der Deckel 21 ausgebildet ist und nach Art einer Überwurfmutter den Stecker in der Steckeraufnahme 20 hält. Der Blockierhebel 29 ist so ausgebildet und seine Ausrichtung relativ zur Schaltwelle 19 derart vorgesehen, dass der Blockierhebel 29 bei eingeschaltetem Leistungsschalter vor der Manschette 30 des Steckers 22 steht und ein Aufschrauben und/oder Abziehen derselben verhindert, siehe Fig. 7 und 8.

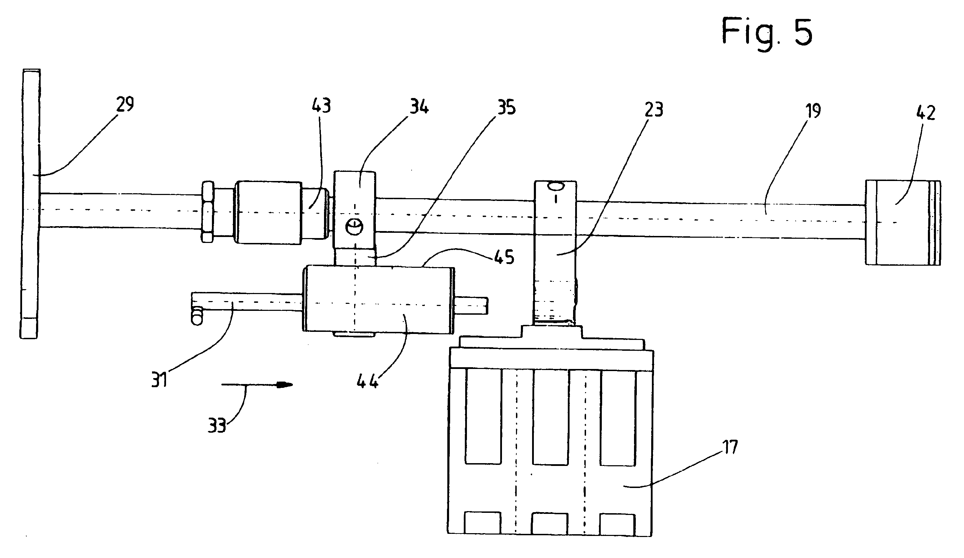

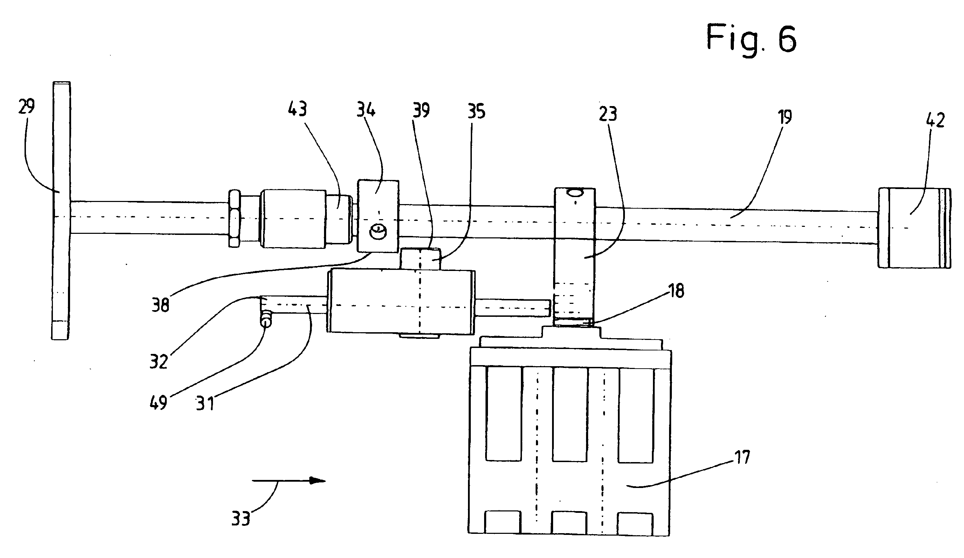

Die Vorrichtung weist eine weitere mechanische Sicherung auf, nämlich gegen das Einschalten des Leistungsschalters bei nicht in die Steckeraufnahme 20 eingesetztem Stecker. Hierzu ist ein Sperrstift 31 vorgesehen, der parallel zur Schaltwelle 19 und zwar verschiebbar angeordnet ist. Ein freies Ende 32 des Sperrstifts 31 ragt in das Innere der Steckeraufnahme 20, so dass der Sperrstift 31 bei Einsetzen eines Steckers in die Steckeraufnahme 20 axial verschoben wird in Richtung des Pfeils 33. Der genannten Bewegung des Sperrstifts 31 entgegen wirkt eine nicht gezeigte Feder. Beim Abziehen des Steckers 22 von der Steckeraufnahme 20 bewegt sich somit der Sperrstift 31 wieder zurück, nämlich in die in Fig. 5 gezeigte Position. Demgegenüber zeigt Fig. 6 den von einem Stecker 22 belasteten Sperrstift 31.

Die beschriebene Bewegung des Sperrstifts 31 wirkt sich auf die Verdrehbarkeit der Schaltwelle 19 aus. Zu diesem Zweck sind beide Elemente miteinander gekoppelt. Auf der Schaltwelle 19 ist ein Sperrstück 34 fest angeordnet. Hierzu korrespondierend sitzt auf dem Sperrstift 31 ein Sperrhebel 35. Gemäß der in Fig. 5 gezeigten Sperrposition blockiert der Sperrhebel 35 das Sperrstück 34. In der entsperrten Position gemäß Fig. 6 sind Sperrstück 34 und Sperrhebel 35 auseinanderbewegt und können einander nicht blockieren.

Das Sperrstück 34 weist mindestens zwei Vorsprünge 36, 37 auf. Diese sind im vorliegenden Fall gebildet durch die äußere Gestalt des Sperrstücks 34, welches als relativ dicke Scheibe mit einer Abflachung 38 an einer Umfangsseite ausgebildet ist. Zur Abflachung korrespondierend weist der Sperrhebel 35 eine (in Sperrposition) im Wesentlichen parallele Stirnfläche 39 auf. Im vorliegenden Fall schließt an die Abflachung 38 einseitig in Umfangsrichtung ein auswärtsgerichteter Absatz 40 an. Zu diesem korrespondierend weist der Sperrhebel 35 eine seitliche Anlagefläche 41 auf. Der Absatz 40 schließt radial außen mit einer Kante ab, die zugleich den Vorsprung 37 bildet.

In der Sperrposition gemäß Fig. 5 - bei nicht eingestecktem Stecker 22 und bei geöffnetem Leistungsschalter - liegt der Absatz 40 nahe der Anlagefläche 41 und die Abflachung 38 nahe der Stirnfläche 39. Eine Verdrehung des Sperrstücks 34 bzw. der Schaltwelle 19 stößt deshalb auf erheblichen mechanischen Widerstand. Erst nach Verschieben des Sperrhebels 35 parallel zur Schaltwelle 19 kann letztere gedreht und der Leistungsschalter 17 eingeschaltet werden.

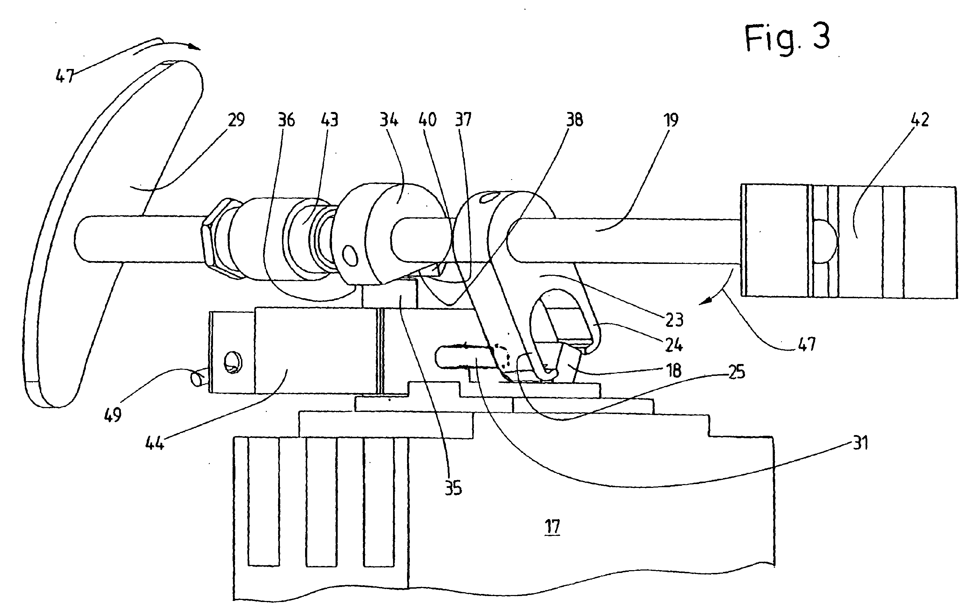

Die Schaltwelle 19 ist im Gehäuse 10 gehalten durch ein mit der Oberwand 11 verbundenes Lager 42 und ein in der Bodenwand 12 gehaltenes Lager 43. Der Blockierhebel 29 ist in seiner einfachsten Ausführung durch endseitiges Umbiegen der Schaltwelle 19 gebildet, siehe Fig. 1. Fig. 3, 5, 6 zeigen demgegenüber ein zur Schaltwelle 19 quer gerichtetes Griffstück nach Art eines zweiarmigen Hebels.

Der Sperrstift ist in einem Stiftgehäuse 44 parallel zur Schaltwelle 19 verschiebbar gelagert und ragt beidseitig aus dem Stiftgehäuse 44 heraus. Letzteres ist in Axialrichtung einseitig mit der Bodenwand 12 verbunden bzw. an dieser gehalten, nimmt eine nicht gezeigte Rückstellfeder für den Sperrstift 31 auf und weist im Bereich einer der Schaltwelle 19 zugewandten Wandung 45 ein Langloch 46 auf. Aus dem Langloch 46 ragt der Sperrhebel 35 hervor. Die seitlichen Begrenzungen des Langlochs 46 können den Sperrhebel 35 gegen Querkräfte abstützen. Derartige Querkräfte treten beim versuchten Drehen der Schaltwelle 19 in der Sperrposition auf. Die Anlagefläche 41 und der Absatz 40 sind so angeordnet, dass sie beim Versuch, den Leistungsschalter in Sperrposition zu betätigen, zur Anlage kommen. Die dabei wirksame Drehrichtung ist in Fig. 3 mit dem Pfeil 47 dargestellt. Entsprechend steht der Schalthebel 18 in Fig. 3 in der "AUS"-Position.

Der Sperrstift 31 ist an seinem in die Steckeraufnahme 20 ragenden Ende 32 mit einem beidseitigen Querhebel 49 verbunden. Der Querhebel 49 ist leicht gekrümmt ausgebildet entsprechend der Krümmung einer Wandung 50 der Steckeraufnahme 20. Innerhalb der Steckeraufnahme 20 liegt der Sperrstift 31 möglichst dicht an der Wandung 50, während der Querhebel 49 zur Wandung einen etwas größeren Abstand aufweist. Der Stecker 22 hat so eine größere wirksame Anlagefläche des Sperrstifts 31 zur Verfügung. Im Ausführungsbeispiel der Fig. 8 sind drei Blockierhebel 29, Schaltwellen 19 und entsprechend auch drei nicht sichtbare Leistungsschalter im Gehäuse 10 vorgesehen. In der Bodenwand 12 ist eine Durchführung 51 für elektrische Leitungen angeordnet.

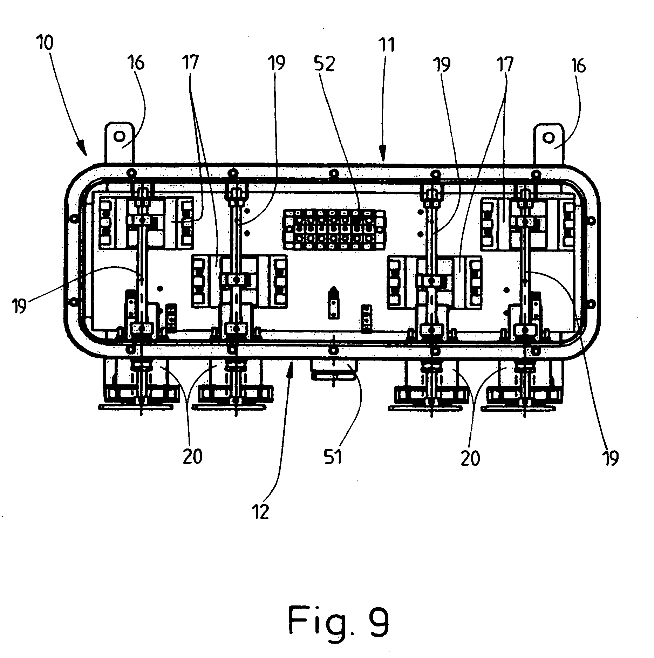

Fig. 9 zeigt eine Ausführung mit vier Leistungsschaltern 17 in einem Gehäuse 10. Die Besonderheit liegt hier in der Anordnung der Leistungsschalter 17 zueinander. Diese sind weitgehend genormt und haben einen bestimmten Raumbedarf. In Abhängigkeit davon sind die Steckeraufnahmen 20 mit den Schaltwellen 19 und die bisher genannten weitergehenden Teile positionierbar. Die Steckeraufnahmen 20 sind nebeneinander auf gleicher Höhe an der Bodenwand 12 angeordnet mit parallel zueinander ausgerichteten Schaltwellen 19. Quer zu den Schaltwellen ausgerichtet sind die Leistungsschalter 17. Entsprechend breit baut das Gehäuse 10. In diesem Zusammenhang muss auch berücksichtigt werden, dass die Verkabelung der Leistungsschalter 17 zusätzlichen Raum benötigt, insbesondere in Richtung der Breite der Leistungsschalter.

Zur Reduzierung der Gehäusebreite (Abmessung des Gehäuses quer zu den Schaltwellen 19 und parallel zur Rückwand 14) ist nun vorgesehen die Leistungsschalter 17 zueinander versetzt anzuordnen, wie dies auch in Fig. 9 gezeigt ist. Jeweils zueinander benachbarte Leistungsschalter 17 sind in Richtung der Schaltwellen versetzt angeordnet, so dass in dieser Richtung keine Überschneidung besteht. Außerdem besteht ein Versatz in der selben Weise gegenüber einem an der Rückwand 14 angeordnetem Klemmenfeld 52, an welches die Leistungsschalter 17 mit der nicht gezeigten Verkabelung angeschlossen sind. Das Klemmenfeld 52 liegt zudem (in Richtung der Schaltwellen 19) genau in einer Flucht mit der Durchführung 51. Auf Grund der Durchführung 51 weisen die beiden mittleren Schaltwellen ohnehin einen größeren Abstand voneinander auf, so dass die zugehörigen Leistungsschalter hier ohne Versatz zueinander angeordnet sein können, da sie nicht unmittelbar zueinander benachbart sind. Der angesprochene Versatz besteht aber zwischen den jeweils äußeren Leistungsschaltern und den benachbarten mittleren Leistungsschaltern.

Vorteilhaft ist bei der in Fig. 9 gezeigten Ausführungsform auch, dass das Klemmenfeld 52 mit Abstand zur Durchführung 51 angeordnet ist, während die hierzu benachbarten (mittleren) Leistungsschalter dichter an der Durchführung 51 angeordnet sind. Dadurch besteht genügend Raum für ein relativ einfaches Anschließen der über die Durchführung 51 in das Gehäuse 10 hineingeführten (nicht gezeigten) elektrischen Leitungen.

### Bezugszeichenliste:

- 10: Gehäuse
- 11: Oberwand
- 12: Bodenwand
- 13: Vorderwand
- 14: Rückwand
- 15: Seitenwand
- 16: Tragblech
- 17: Leistungsschalter
- 18: Schalthebel
- 19: Schaltwelle
- 20: Steckeraufnahme
- 21: Deckel
- 22: Stecker
- 23: Schaltgabel
- 24: Gabelarm
- 25: Gabelarm
- 26: Ende
- 27: Ende
- 28: Doppelpfeil
- 29: Blockierhebel
- 30: Manschette
- 31: Sperrstift
- 32: Ende
- 33: Pfeil
- 34: Sperrstück
- 35: Sperrhebel
- 36: Vorsprung
- 37: Vorsprung
- 38: Abflachung
- 39: Stirnfläche
- 40: Absatz
- 41: Anlagefläche
- 42: Lager
- 43: Lager
- 44: Stiftgehäuse
- 45: Wandung
- 46: Langloch
- 47: Pfeil
- 48: --
- 49: Querhebel
- 50: Wandung
- 51: Durchführung
- 52: Klemmenfeld

## Patentansprüche

1. Vorrichtung mit Gehäuse (10), mindestens einer Steckeraufnahme (20), mindestens einem Leistungsschalter (17), mindestens einer Betätigungseinrichtung für den Leistungsschalter und insbesondere mindestens einem Sperrmittel für die Betätigungseinrichtung, mit folgenden Merkmalen:
a) die Betätigungseinrichtung weist eine drehbare Schaltwelle (19) auf,
b) die Schaltwelle (19) ist mit einem Kupplungsstück versehen,
c) die Schaltwelle (19) ist zumindest zwischen einer "Ein"-Position und einer "Aus"-Position drehbar,
d) die Schaltwelle (19) weist einen quergerichteten Blockierhebel (29) auf, der in der "Ein"-Position ein Herausziehen eines Steckers (22) aus der Steckeraufnahme (20) blockiert und in der "Aus"-Position das Einsetzen und/oder Herausziehen des Steckers (22) in die bzw. aus der Steckeraufnahme (20) zulässt,
**gekennzeichnet durch** folgende Merkmale:
e) ein Schalthebel (18) des Leistungsschalters (17) ist im Wesentlichen in einer Ebene quer zur Längsrichtung der Schaltwelle (19) bewegbar,
f) das Kupplungsstück und der Schalthebel (18) sind so ausgebildet, dass eine mit der Schaltwelle (19) rotierende Bewegung des Kupplungsstücks den Schalthebel (18) direkt beaufschlagt,
g) das Kupplungsstück ist eine auf der Schaltwelle (19) angeordnete Schaltgabel (23) mit Gabelarmen (24, 25),
h) je nach Drehbewegung der Schaltwelle (19) drücken die Gabelarme (24, 25) den Schalthebel (18) in die eine oder andere Richtung.

2. Vorrichtung nach Anspruch 1, **dadurch gekennzeichnet, dass** im Gehäuse (10) in Längsrichtung desselben mehrere Leistungsschalter (17) nebeneinander angeordnet sind, bei quer zur Längsrichtung des Gehäuses' (10) ausgerichteten Schaltwellen (19) und dass zueinander benachbarte Leistungsschalter (17) in Richtung der Schaltwellen (19) versetzt zueinander angeordnet sind, insbesondere unter Vermeidung einer Überdeckung.

3. Vorrichtung nach Anspruch 1 oder 2, **dadurch gekennzeichnet, dass** das Sperrmittel einen Sperrstift (31) umfasst, der vom Stecker (22) beim Einsetzen desselben in die Steckeraufnahme (20) aus einer Sperrposition axial verschiebbar ist in eine entsperrte Position, wobei der Sperrstift (31) in der Sperrposition mittelbar oder unmittelbar die Betätigung des Schalthebels (18) oder der Schaltwelle (19) blockiert.

4. Vorrichtung nach Anspruch 1 oder einem der weiteren Ansprüche, **dadurch gekennzeichnet, dass** der Sperrstift (31) bei der Bewegung in die Sperrposition einen Sperrhebel (35) bewegt, der in Sperrposition in den Bewegungsraum eines von der Schaltwelle (19) betätigten Vorsprungs (36, 37) ragt und so eine Drehbewegung der Schaltwelle (19) zumindest aus der "AUS"-Position in die "EIN"-Position blockiert.

5. Vorrichtung nach Anspruch 1 oder einem der weiteren Ansprüche, **dadurch gekennzeichnet, dass** auf der Schaltwelle (19) ein Sperrstück (34) angeordnet ist mit mindestens einem wirksamen Vorsprung (36, 37), und dass eine Drehung der Schaltwelle (19) in mindestens einer Richtung durch eine Bewegung eines Sperrmittels in den Bewegungsraum des drehenden Vorsprungs (36, 37) blockierbar ist.

6. Vorrichtung nach Anspruch 5, **dadurch gekennzeichnet, dass** das Sperrstück (34) zwei wirksame Vorsprünge (36, 37) aufweist, derart, dass eine Drehung der Schaltwelle (19) in beide Richtungen durch das Sperrmittel blockierbar ist.

## Claims

1. Apparatus having a housing (10), at least one plug receptacle (20), at least one circuit breaker (17), at least one actuating device for the circuit breaker and in particular at least one inhibiting means for the actuating device, having the following features:
a) the actuating device has a rotatable switching shaft (19),
b) the switching shaft (19) is provided with a coupling piece,
c) the switching shaft (19) can rotate at least between an "on" position and an "off" position,
d) the switching shaft (19) has a transversely pointing blocking lever (29), which blocks withdrawal of a plug (22) from the plug receptacle (20) in the "ON" position and allows insertion and/or withdrawal of the plug (22) into and/or from the plug receptacle (20) in the "OFF" position,
**characterized by** the following features:
e) a switching lever (18) of the circuit breaker (17) can be moved essentially in a plane transverse with respect to the longitudinal direction of the switching shaft (19),
f) the coupling piece and the switching lever (18) are designed such that a rotary movement of the coupling piece with the switching shaft (19) acts directly on the switching lever (18),
g) the coupling piece is a switching fork (23) arranged on the switching shaft (19) and having fork arms (24, 25), and
h) depending on the rotary movement of the switching shaft (19), the fork arms (24, 25) push the switching lever (18) in one or the other direction.

2. Apparatus according to Claim 1, **characterized in that** a plurality of circuit breakers (17) are arranged next to one another in the housing (10) in the longitudinal direction thereof, in the case of switching shafts (19) which are aligned transversely with respect to the longitudinal direction of the housing (10), and **in that** mutually adjacent circuit breakers (17) are arranged such that they are offset with respect to one another in the direction of the switching shafts (19), in particular so as to avoid any overlap.

3. Apparatus according to Claim 1 or 2, **characterized in that** the inhibiting means comprises an inhibiting pin (31), which can be displaced axially from an inhibited position to an uninhibited position by the plug (22) when the plug is inserted into the plug receptacle (20), the inhibiting pin (31) in the inhibited position indirectly or directly blocking the actuation of the switching lever (18) or the switching shaft (19).

4. Apparatus according to Claim 1 or one of the other claims, **characterized in that** the inhibiting pin (31), when moving into the inhibited position, moves an inhibiting lever (35), which protrudes, in the inhibited position, into the movement area of a projection (36, 37) actuated by the switching shaft (19) and therefore blocks a rotary movement of the switching shaft (19) at least from the "OFF" position to the "ON" position.

5. Apparatus according to Claim 1 or one of the other claims, **characterized in that** an inhibiting piece (34) is arranged on the switching shaft (19), having at least one effective projection (36, 37), and **in that** a rotation of the switching shaft (19) in at least one direction can be blocked by a movement of an inhibiting means into the movement area of the rotating projection (36, 37).

6. Apparatus according to Claim 5, **characterized in that** the inhibiting piece (34) has two effective projections (36, 37) such that a rotation of the switching shaft (19) in both directions can be blocked by the inhibiting means.

## Revendications

1. Dispositif avec un boîtier (10), au moins une prise (20), au moins un interrupteur de puissance (17), au moins un dispositif d'actionnement pour l'interrupteur de puissance et notamment au moins un moyen de blocage pour le dispositif d'actionnement, ayant les caractéristiques suivantes :
a) le dispositif d'actionnement présente une tige de commutation rotative (19),
b) la tige de commutation (19) est pourvue d'un élément d'accouplement,
c) la tige de commutation (19) peut tourner au moins entre une position "marche" et une position "arrêt",
d) la tige de commutation (19) présente un levier de blocage (29) orienté transversalement, qui, dans la position "marche", empêche le retrait d'une fiche (22) hors de la prise (20) et dans la position "arrêt", autorise l'insertion et/ou le retrait de la fiche (22) dans ou hors de la prise (20),
**caractérisé par** les caractéristiques suivantes :
e) un levier de commutation (18) de l'interrupteur de puissance (17) peut se déplacer sensiblement dans un plan transversal à la direction longitudinale de la tige de commutation (19),
f) l'élément d'accouplement et le levier de commutation (18) sont réalisés de telle sorte qu'un mouvement de l'élément d'accouplement tournant avec la tige de commutation (19) sollicite directement le levier de commutation (18),
g) l'élément d'accouplement est une fourche de commutation (23) avec des bras de fourche (24, 25) disposée sur la tige de commutation (19),
h) en fonction du mouvement de rotation de la tige de commutation (19), les bras de fourche (24, 25) pressent le levier de commutation (18) dans un sens ou dans l'autre.

2. Dispositif selon la revendication 1, **caractérisé en ce que** plusieurs interrupteurs de puissance (17) sont disposés les uns à côté des autres dans le boîtier (10) dans sa direction longitudinale, alors que les tiges de sélection (19) sont orientées transversalement à la direction longitudinale du boîtier (10), et **en ce que** des interrupteurs de puissance adjacents (17) sont disposés de manière décalée les uns par rapport aux autres dans la direction des tiges de commutation (19), notamment en évitant un chevauchement.

3. Dispositif selon la revendication 1 ou 2, **caractérisé en ce que** le moyen de blocage comprend une goupille de blocage (31) qui peut être déplacée axialement par la fiche (22) lors de l'insertion de celle-ci dans la prise (20) depuis une position de blocage dans une position débloquée, la goupille de blocage (31), dans la position de blocage, bloquant de manière directe ou indirecte l'actionnement du levier de commutation (18) ou de la tige de commutation (19).

4. Dispositif selon la revendication 1 ou l'une quelconque des autres revendications, **caractérisé en ce que** la goupille de blocage (31), lors de son déplacement dans la position de blocage, déplace un levier de blocage (35) qui, dans la position de blocage, pénètre dans l'espace de déplacement d'une saillie (36, 37) actionnée par la tige de commutation (19), et bloque ainsi un mouvement de rotation de la tige de commutation (19) au moins de la position "arrêt" dans la position "marche".

5. Dispositif selon la revendication 1 ou l'une quelconque des autres revendications, **caractérisé en ce que** l'on dispose sur la tige de commutation (19) un élément de blocage (34) avec au moins une saillie active (36, 37), et **en ce qu'**une rotation de la tige de commutation (19) dans au moins un sens peut être bloquée par un mouvement d'un moyen de blocage dans l'espace de déplacement de la saillie rotative (36, 37).

6. Dispositif selon la revendication 5, **caractérisé en ce que** l'élément de blocage (34) présente deux saillies actives (36, 37) de telle sorte qu'une rotation de la tige de commutation (19) dans les deux sens puisse être bloquée par le moyen de blocage.
